# FASCICULE DE BREVET EUROPEEN

(11) **EP 1 160 046 B1**
(45) Date de publication et mention de la délivrance du brevet: **22.10.2008**
(21) Numéro de dépôt: 01401191.0
(22) Date de dépôt: 10.05.2001
(51) Int. Cl.: B23K 26/14, B23K 26/24, B23K 9/02, B23K 26/30

(54) **Application d'un procédé hybride laser-arc au soudage de tube**
Anwendung eines hybriden Laser-Lichtbogen-Verfahrens zum Schweissen eines Rohres
Application of a laser-arc hybrid process to tube welding

(30) Priorité: 31.05.2000 FR 0007010
(43) Date de publication de la demande: 05.12.2001
(73) Titulaire: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Briand, Francis, 75009 Paris (FR); Bonnet, Christian, 95650 Puiseux-Pontoise (FR)
(74) Mandataire: Pittis, Olivier

(56) Documents cités:
- EP-A- 0 496 231
- WO-A-96/09135
- MATSUDA J ET AL: "TIG OR MIG ARC AUGMENTED LASER WELDING OF THICK MILD STEEL PLATE" JOINING AND MATERIALS,WELDING INSTITUTE, ABINGTON,,GB, 1988, pages 31-34, XP000937541 ISSN: 0954-1497

## Description

La présente invention concerne un procédé selon le préambule de la revendication 1.

Le document EP-A-496231 décrit un tel procédé.

La technologie du laser est connue et largement utilisée depuis des années pour souder des matériaux métalliques divers, telles des pièces en aciers alliés ou non, en aciers revêtus, en aciers inoxydables, en aluminium et alliages d'aluminium, ou encore des tubes en métaux divers.

D'une façon générale, une installation de soudage laser de soudage de tube comprend, outre les moyens d'amenée et de maintien du tube, un oscillateur laser solide ou à gaz produisant un faisceau monochromatique cohérent de haute énergie, un chemin optique équipé de miroirs de renvois ou bien une fibre optique permettant d'amener le faisceau laser vers une tête de soudage située en regard du tube à souder.

La tête de soudage comprend classiquement une lentille ou un ou plusieurs miroirs de focalisation de façon à focaliser le faisceau laser en un ou plusieurs points de focalisation dans l'épaisseur du matériau à souder et au niveau du plan de joint (formage en "O") obtenu par réunion bord-à-bord des bords longitudinaux de la feuille métallique à souder en forme de tube de façon à concentrer localement suffisamment de densité de puissance pour fondre le matériau à souder.

Habituellement, la tête de soudage comprend un dispositif d'amené de gaz permettant l'alimentation en gaz de soudage, encore appelé gaz d'assistance, par l'intermédiaire d'une buse de distribution de gaz placée coaxialement au faisceau laser. Ce dispositif d'amené de gaz peut être aussi extérieur à la tête de soudage laser proprement dite.

Une solution alternative pour souder les bords à unir l'un avec l'autre pour former un tube consiste à réaliser la fusion desdits bords à unir au niveau du plan de joint au moyen d'un ou plusieurs arcs électriques et en utilisant du gaz soit en tant que gaz de protection, soit en tant que gaz actif.

De tels procédés de soudage sont également couramment utilisés dans l'industrie ; selon le cas, il s'agit des procédés TIG (Tunsgten Inert Gas), MIG (Metal Inert Gas), MAG (Metal Active Gas) ou encore des procédés à l'arc plasma ou à l'arc submergé.

De tels procédés de soudage sont décrits notamment par les documents suivants : EP-A-847831, US-A-4,673,121, EP-A-136276, JP-A-58148096, JP-A-03198998, JP-A-03198997, EP-A-896853, US-A-5,192,016, US-A-4,738,714, EP-A-899052, JP-A-58107294, EP-A-234623, US-A-1,872,008, US-A-4,396,820, US-A-4,811,888 et US-A-3,931,489.

Le document WO-96-09135 décrit un procédé de soudage par faisceau laser et arc électrique de deux pièces métalliques, en particulier de flancs raboutés.

Toutefois, les procédés de soudage par laser ou les procédés de soudage à l'arc présentent chacun des inconvénients qui leurs sont propres.

En effet, la fabrication d'un tube comporte, en général, une phase de formation d'un pré-tube à partir d'une bande métallique rectangulaire ou feuillard, suivie d'une phase de soudage du pré-tube en un tube soudé.

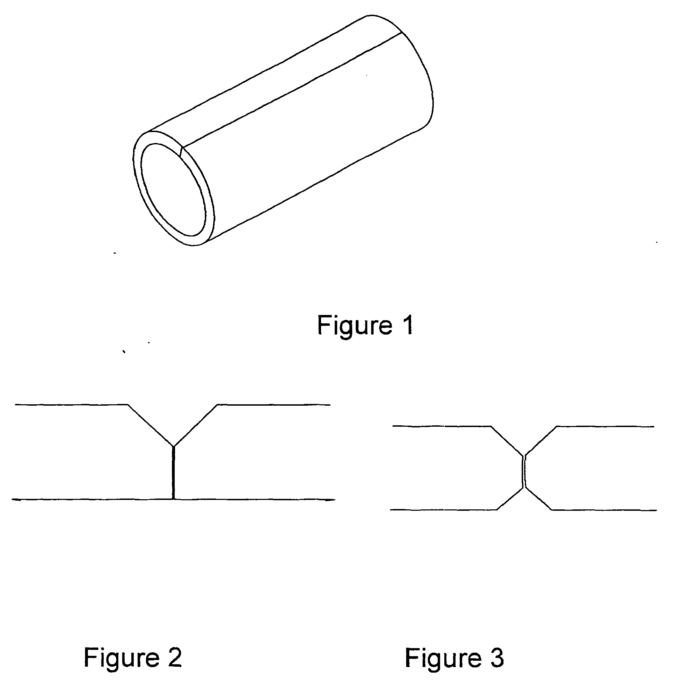

Selon une première technique, le soudage est réalisé axialement, c'est-à-dire que la bande métallique est successivement mise en forme de U puis de O par rapprochement de ses deux bords longitudinaux parallèles de manière à obtenir un pré-tube non soudé, et on opère ensuite un soudage longitudinal ou axial des deux bords à rabouter du pré-tube avec ou sans chanfrein pour obtenir un tube soudé axialement, comme schématisé sur la figure 1.

Toutefois, selon une deuxième technique, le soudage peut être hélicoïdal ou en spirale. Dans ce cas, la bande métallique est d'abord soumise à une torsion selon un mouvement en spirale de manière à obtenir un rapprochement ou raboutage des deux bords longitudinaux de ladite bande selon un plan de joint ayant une forme de spirale ou d'hélice de manière à former, là encore, un pré-tube non soudé, ce pré-tube étant alors soumis à un soudage hélicoïdal de manière à assembler lesdits deux bords pour obtenir un tube soudé.

Bien entendu, dans tous les cas, le pré-tube et la tête de soudage sont animés d'un mouvement de déplacement relatif l'un par rapport à l'autre, c'est-à-dire soit le tube est fixe et la tête de soudage se déplace, soit l'inverse.

La phase de soudage peut se faire en une ou plusieurs passes et par mise en oeuvre d'un ou plusieurs procédés de soudage suivant le diamètre et l'épaisseur du pré-tube à souder.

En général, pour des tubes de faibles épaisseurs, c'est-à-dire de 1 mm à 6 mm, et de faibles diamètres, typiquement de 10 à 100 mm, les opérations de formage et de soudage des tubes sont réalisées quasi-simultanément.

Pour ce faire, comme évoqué ci-avant, une machine équipée d'une ligne de galets presseurs, de profils bien définis, vient déformer progressivement et en continu le ruban métallique se déplaçant relativement par rapport auxdits galets, pour lui donner la forme du pré-tube souhaité, les deux extrémités ou bords longitudinaux du pré-tube étant ensuite soudées ensemble pour obtenir le tube.

Ces opérations sont effectuées à grande vitesse et il est important d'utiliser des procédés de soudage qui permettent d'avoir la pénétration désirée sans ralentir le processus de formage, c'est-à-dire aussi une vitesse minimale désirée permettant de conserver une productivité maximale ou, en tout cas, la plus élevée possible.

Dans les lignes de fabrication industrielles de tubes, on utilise très souvent le processus de soudage multi-cathodes qui met en oeuvre, en général, plusieurs arcs électriques TIG ou plasma alignés dans le plan de joint à souder.

Parfois, on utilise également le soudage par laser pour souder les tubes. En effet, par rapport au procédé multi-cathodes, l'utilisation d'un laser permet d'augmenter les vitesses mais au détriment d'une précision accrue qui impose alors un alignement beaucoup plus précis des bords à souder ainsi qu'un contrôle précis du jeu entre les bords à souder, ce qui est fort coûteux sur le plan des outillages à mettre en oeuvre.

Un procédé juxtaposant les techniques précédentes est décrit par le document EP-A-496231 et consiste à souder successivement les bords du pré-tube avec d'abord un faisceau laser puis avec un arc délivré par une électrode en tungstène. Toutefois, dans ce cas, le soudage par faisceau laser étant réalisé en premier lieu, les problèmes analogues à ceux susmentionnés se posent.

En outre, pour des tubes d'épaisseurs plus importantes, par exemple de 6 à 50 mm, le formage et le soudage ne sont, en général, pas simultanés. Le tube est d'abord mis à sa forme définitive, c'est-à-dire sa forme de pré-tube, puis seulement soudé.

Pour ces épaisseurs, on procède, en général, en plusieurs passes, typiquement en trois passes ou plus, à savoir : une passe dite "d'agrafage" et deux passes de soudage. Pour ce faire, les bords à rabouter sont chanfreinés en X et on crée, sensiblement au milieu de l'épaisseur du joint, un talon qui va permettre l'agrafage, réalisé par soudage MIG, et ainsi empêcher toute déformation ultérieure, lors des passes de soudage subséquentes. Ensuite, on soude, le tube ainsi agrafé ou pré-accroché à l'aide d'un procédé de soudage à l'arc submergé à l'envers et à l'endroit du joint, comme montré sur la figure 3.

Au vu de cela, un des problèmes qui se pose encore est de pouvoir disposer d'un procédé de soudage permettant de souder efficacement les tubes de toute épaisseur à vitesse élevée et/ou avec un nombre de passes limité, c'est-à-dire permettant :
- soit de réaliser une passe initiale dite "d'agrafage" à plus grande vitesse (cas d'un tube avec chanfrein en X),
- soit de diminuer le nombre de passes (2 au lieu de 3) en réalisant un chanfrein en Y (cf. fig. 2) à la place d'un chanfrein en X et en effectuant alors la passe initiale d'agrafage ou la passe de fond à plus grande vitesse,
- soit, pour des épaisseurs comprises entre 6 et 10mm, de réaliser le soudage en une seule passe et sans chanfrein.

Le but de la présente invention est de résoudre les problèmes susmentionnés en proposant un procédé de fabrication de tube amélioré mettant en oeuvre un procédé de soudage hybride combinant faisceau laser et arc électrique.

La solution apportée par la présente invention est alors un procédé de fabrication d'un tube soudé selon la revendication 1.

Dans le cadre de l'invention, les bords longitudinaux peuvent être rapprochés l'un de l'autre :
- de manière à obtenir un plan et/ou un joint de soudure soit approximativement rectiligne, soit de forme hélicoïdale ;
- soit de façon continue, c'est-à-dire les bords sont progressivement et localement rapprochés l'un de l'autre au fur et à mesure du défilement, du formage en "O" et du soudage de la feuille métallique ; soit de façon globale, c'est-à-dire que les deux bords sont rapprochés en totalité l'un de l'autre, puis seulement soudés (cas des tubes d'épaisseur importante).

Selon le cas, le procédé de l'invention peut comprendre l'une ou plusieurs des caractéristiques suivantes :
- la bande métallique est mise en mouvement relatif par rapport au faisceau laser et l'arc électrique qui sont fixes de façon à réaliser un joint soudé continu entre lesdits deux bords longitudinaux, de préférence la bande métallique est mise en mouvement au moyen de galets d'entraînement.
- la bande a une épaisseur supérieure ou égale à 10 mm et d'au plus 100 mm. Dans ce cas, il n'y a pas forcément formage et soudage quasi-simultanés, mais plus généralement formage en "O" par mise en contact bord-à-bord de la totalité des deux bords de la feuille métallique, puis seulement soudage de ceux-ci.
- la feuille a une épaisseur inférieure à 10 mm, en particulier de 1 mm à 6 mm.
- le faisceau laser est émis par un laser de type Nd:YAG ou CO₂.
- l'arc électrique est un arc plasma, de préférence le faisceau laser et ledit arc sont délivrés par une tête de soudage unique.
- les bords à souder sont chanfreinés ou usinés de manière à créer un talon faisant saillie par rapport à la surface des bords à souder et lesdits talons étant ensuite soudés ensemble par mise en oeuvre du faisceau laser et de l'arc électrique.
- les bords à souder sont soudés en une seule passe de soudage.
- le gaz d'assistance du faisceau laser et le gaz pour l'arc électrique sont choisis parmi argon, hélium, azote, hydrogène, oxygène, dioxyde de carbone ou leurs mélanges.
- la vitesse de soudage est comprise entre 5m/mn et 20m/mn.
- la bande métallique est en un métal ou un alliage métallique choisi parmi les aciers au carbone, les aciers inoxydables, tels les aciers austénitiques, ferritiques, martensitiques ou duplex ; les aciers à hautes limites élastiques ; les aciers revêtus ou non, les alliages au nickel, les alliages cuivreux et les alliages de titane.
- on réalise un joint des soudure de forme hélicoïdale ou spiralée.

L'invention porte aussi sur une utilisation d'un procédé de soudage hybride laser-arc, en particulier laser-plasma, mettant en oeuvre approximativement simultanément au moins un faisceau laser et au moins un arc électrique, de préférence un arc-plasma, pour souder ensemble deux bords longitudinaux d'une bande métallique, qui sont rapprochés l'un de l'autre de manière à venir approximativement en contact l'un avec l'autre et former ainsi un pré-tube non soudé, et obtenir un tube métallique soudé par combinaison desdits au moins un faisceau laser et au moins un arc électrique.

Dit autrement, l'objet de l'invention est l'utilisation de la combinaison laser/arc électrique soit pour former/souder les tubes dans le cas d'épaisseurs inférieures à 6mm, soit de souder les tubes d'épaisseurs comprises entre 6 et 10 mm en une seule passe, soit de réaliser la passe d'agrafage sur des chanfreins en X ou en Y.

Cela permet, dans tous les cas, d'augmenter les vitesses de soudage et/ou de diminuer le nombre de passes sans sacrifier aux tolérances d'accostage qui, de ce fait, restent assez larges et ce qui permet, en outre, d'améliorer la productivité du procédé de fabrication grâce au gain de temps qui en découle.

En effet, l'utilisation d'un faisceau laser seul ne permet pas d'effectuer les mêmes opérations avec la même latitude de positionnement du joint, tandis que le procédé de soudage plasma seul ne permet pas d'atteindre les vitesses de soudage désirées.

De façon générale, le procédé de soudage plasma-laser ou laser-arc est un procédé de soudage hybride ou mixte qui associe le soudage à l'arc électrique à un faisceau laser.

Le procédé plasma-laser consiste à générer un arc électrique entre une électrode, fusible ou non fusible, et la pièce à souder, et à focaliser un faisceau laser de puissance, notamment un laser de type YAG ou de type CO₂, dans la zone d'arc, c'est-à-dire au niveau ou dans le plan de joint obtenu par réunion bord-à-bord des parties du pré-tube à souder entre elles.

Un tel procédé hybride permet d'améliorer considérablement les vitesses de soudage par rapport au soudage laser seul ou au soudage à l'arc ou au plasma seul.

Comme susmentionné, un tel procédé hybride permet aussi d'accroître notablement les tolérances de positionnement des bords du pré-tube avant soudage ainsi que le jeu toléré entre les bords à souder, en particulier par rapport au soudage par faisceau laser seul qui exige une précision importante de positionnement des parties à souder à cause de la petite taille du point focal du faisceau laser.

La mise en oeuvre d'un procédé plasma-laser, et plus généralement d'un procédé arc-laser, requiert l'utilisation d'une tête de soudage qui permet de combiner dans un espace réduit le faisceau laser et son dispositif de focalisation, ainsi qu'une électrode de soudage adaptée. Plusieurs configurations de têtes sont décrites dans les documents ci-après mentionnés et l'on peut dire, en résumé, que le faisceau laser et l'arc électrique ou le jet de plasma peuvent être délivrés par une seule et même tête de soudage, c'est-à-dire qu'ils sortent par le même orifice, ou alors par deux têtes de soudage distinctes, l'une délivrant le faisceau laser et l'autre l'arc électrique ou le jet de plasma, ceux-ci se réunissant dans la zone de soudage.

Divers procédés de soudage hybrides arc et laser ont été décrits notamment dans les documents EP-A-793558 ; EP-A-800434 ; US-A-5,006,688 ; US-A-5,700,989 ; EP-A-844042 ; Laser GTA'Welding of aluminium alloy 5052, TP Diebold et CE Albright, 1984, p. 18-24 ; SU-A-1815085, US-A-4,689,466 ; Plasma arc augmented laser welding, RP Walduck et J Biffin, p.172-176, 1994; ou TIG or MIG arc augmented laser welding of thick mild steel plate, Joining and Materials, de J Matsuda et al., p. 31-34, 1988.

Dans le cadre de la présente invention, on pourra mettre en oeuvre l'un ou l'autre de ces procédés de façon indifférente mais à condition de l'adapter au cas d'espèce, c'est-à-dire au soudage de tubes puisque ces documents ne concernent pas le soudage de tubes.

En effet, les procédés hybrides arc-laser étaient jusqu'à présent réputés être parfaitement adaptés au soudage des flancs raboutés (ou tailored blanks) pour l'industrie automobile, dans le sens où, en plus des avantages précédemment cités, ils permettent d'obtenir un cordon de soudure bien mouillé et exempt de caniveaux, comme le rappelle les documents EP-A-782489 ou le document Laser plus arc equals power, Industrial Laser Solutions, February 1999, p.28-30.

## Revendications

1. Procédé de fabrication d'un tube soudé à partir d'une bande métallique ayant deux bords longitudinaux qui sont rapprochés l'un de l'autre de manière à venir approximativement en contact l'un avec l'autre et former ainsi un pré-tube non soudé, les deux bords longitudinaux de la bande métallique ayant une forme de pré-tube étant ensuite soudés l'un avec l'autre pour obtenir un tube métallique soudé par mise en oeuvre, approximativement simultanément, d'au moins un faisceau laser et d'au moins un arc électrique, **caractérisé en ce que ledit arc et ledit faisceau laser** se combinent l'un à l'autre **en un point d'impact ou zone d'impact unique au niveau du plan de joint à souder** de manière à obtenir une fusion localisée du métal des bords à unir par action du faisceau laser et de l'arc électrique ainsi combinés l'un à l'autre.

2. Procédé selon la revendication 1, **caractérisé en ce que** la bande métallique est mise en mouvement relatif par rapport au faisceau laser et l'arc électrique qui sont fixes de façon à réaliser un joint soudé continu entre lesdits deux bords longitudinaux, de préférence la bande métallique est mise en mouvement au moyen de galets d'entraînement.

3. Procédé selon l'une des revendications 1 ou 2, **caractérisé en ce que** la bande à une épaisseur supérieure ou égale à 10 mm et d'au plus 100 mm.

4. Procédé selon l'une des revendications 1 ou 2, **caractérisé en ce que** la feuille à une épaisseur inférieure à 10 mm, en particulier de 1 mm à 6 mm.

5. Procédé selon l'une des revendications 1 à 4, **caractérisé en ce que** le faisceau laser est émis par un laser de type Nd:YAG ou CO₂ et/ou **en ce que** l'arc électrique est un arc plasma, de préférence le faisceau laser et ledit arc sont délivrés par une tête de soudage unique.

6. Procédé selon l'une des revendications 1 à 5, **caractérisé en ce que** les bords à souder sont chanfreinés ou usinés de manière à créer un talon faisant saillie par rapport à la surface des bords à souder et lesdits talons étant ensuite soudés ensemble par mise en oeuvre du faisceau laser et de l'arc électrique.

7. Procédé selon l'une des revendications 1, 2 ou 4 à 6, **caractérisé en ce que** les bords à souder sont soudés en une seule passe de soudage.

8. Procédé selon l'une des revendications 1, 2 ou 4 à 6, **caractérisé en ce que** le gaz d'assistance du faisceau laser et le gaz pour l'arc électrique sont choisis parmi argon, hélium, azote, hydrogène, oxygène, dioxyde de carbone ou leurs mélanges.

9. Procédé selon l'une des revendications 1 à 8, **caractérisé en ce que** la vitesse de soudage est comprise entre 5m/mn et 20m/mn.

10. Procédé selon l'une des revendications 1 à 9, **caractérisé en ce que** la bande métallique est en un métal ou un alliage métallique choisi parmi les aciers au carbone, les aciers inoxydables, les aciers à hautes limites élastiques, les aciers revêtus ou non, les alliages au nickel, les alliages cuivreux et les alliages de titane.

11. Procédé selon l'une des revendications 1 à 10, **caractérisé en ce qu'**on réalise un joint des soudure de forme hélicoïdale ou spiralée.

## Claims

1. Process for manufacturing a welded pipe from a metal strip having two longitudinal edges which are brought together so as to come approximately into contact with one another and thus form an unwelded pre-tube, the two longitudinal edges of the metal strip having a pre-tube form then being welded together, in order to obtain a welded metal tube by using, approximately simultaneously, at least one laser beam and at least one electric ,arc, **characterized in that** said arc and said laser beam combine together at a single impingement point or impingement area in the weld joint plane so that the metal of the edges to be joined together undergoes localized melting by the action of the laser beam and the electric arc thereby combined together.

2. Process according to Claim 1, **characterized in that** the metal strip is made to move relative to the laser beam and the electric arc which are fixed, so as to produce a continuous welded joint or seam between said two longitudinal edges, preferably the metal strip being moved by means of drive rollers.

3. Process according to either of Claims 1 and 2, **characterized in that** the strip has a thickness of greater than or equal to 10 mm and at most 100 mm.

4. Process according to either of Claims 1 and 2, **characterized in that** the sheet has a thickness of less than 10 mm, particularly 1 mm to 6 mm.

5. Process according to one of Claims 1 to 4, **characterized in that** the laser beam is emitted by an Nd:YAG- or CO₂-type laser and/or **in that** the electric arc is a plasma arc, preferably the laser beam and said arc being delivered by a single welding head.

6. Process according to one of Claims 1 to 5, **characterized in that** the edges to be welded are grooved or machined so as to create a heel projecting with respect to the surface of the edges to be welded and said heels are then welded together by using the laser beam and the electric arc.

7. Process according to one of Claims 1, 2 or 4 to 6, **characterized in that** the edges to be welded are welded in a single welding pass.

8. Process according to one of Claims 1, 2 or 4 to 6, **characterized in that** the assist gas for the laser beam and the gas for the electric arc are chosen from argon, helium, nitrogen, hydrogen, oxygen, carbon dioxide or mixtures thereof.

9. Process according to one of Claims 1 to 8, **characterized in that** the welding speed is between 5 m/minute and 20 m/minute.

10. Process according to one of Claims 1 to 9, **characterized in that** the metal strip is made of a metal or metal alloy chosen from carbon steels, stainless steels, high yield strength steels, coated or uncoated steels, nickel alloys, copper alloys and titanium alloys.

11. Process according to one of Claims 1 to 10, **characterized in that** a weld seam of helicoidal or spiral shape is formed.

## Patentansprüche

1. Verfahren zur Herstellung eines geschweißten Rohres aus einem Metallband, das zwei Längsränder aufweist, die derart aneinander angesetzt werden, dass sie ungefähr miteinander in Kontakt kommen und so ein nicht geschweißtes Vorrohr bilden, wobei die zwei Längsränder des Metallbandes die Form eines Vorrohrs aufweisen, wobei sie danach miteinander verschweißt werden, um durch den ungefähr gleichzeitigen Einsatz mindestens eines Laserstrahls und mindestens eines elektrischen Lichtbogens ein verschweißtes Metallrohr zu erhalten, **dadurch gekennzeichnet, dass** der Lichtbogen und der Laserstrahl sich auf einem einzigen Auftreffpunkt oder Auftreffbereich in Höhe der zu schweißenden Verbindungsebene verbinden, derart, dass ein örtlich begrenztes Schmelzen des Metalls der durch die Wirkung des so miteinander verbundenen Laserstrahls und elektrischen Lichtbogens zu verbindenden Ränder erhalten wird.

2. Verfahren nach Anspruch 1, **dadurch gekennzeichnet, dass** das Metallband in Bezug auf den Laserstrahl und den elektrischen Lichtbogen, die feststehend sind, in Bewegung gesetzt wird, derart, dass eine kontinuierliche Schweißverbindung zwischen den zwei Längsrändern ausgeführt wird, wobei das Metallband vorzugsweise mittels Antriebsrollen in Bewegung gesetzt wird.

3. Verfahren nach einem der Ansprüche 1 oder 2, **dadurch gekennzeichnet, dass** das Band eine Dicke von größer oder gleich 10 mm und von höchstens 100 mm aufweist.

4. Verfahren nach einem der Ansprüche 1 oder 2, **dadurch gekennzeichnet, dass** das Blatt eine Dicke von weniger als 10 mm, insbesondere von 1 mm bis 6 mm, aufweist.

5. Verfahren nach einem der Ansprüche 1 bis 4, **dadurch gekennzeichnet, dass** der Laserstrahl durch einen Laser des Typs Nd:YAG oder CO₂ ausgestrahlt wird und/oder **dadurch**, dass der elektrische Lichtbogen ein Plasmalichtbogen ist, wobei der Laserstrahl und der Lichtbogen vorzugsweise durch einen einzigen Schweißkopf geliefert werden.

6. Verfahren nach einem der Ansprüche 1 bis 5, **dadurch gekennzeichnet, dass** die zu schweißenden Ränder abgeschrägt oder derart bearbeitet werden, dass ein Ansatz erzeugt wird, der in Bezug auf die Fläche der zu schweißenden Ränder vorspringt und die Ansätze dann durch den Einsatz des Laserstrahls und des elektrischen Lichtbogens zusammengeschweißt werden.

7. Verfahren nach einem der Ansprüche 1, 2 oder 4 bis **6, dadurch gekennzeichnet, dass** die zu schweißenden Ränder in einem einzigen Schweißgang geschweißt werden.

8. Verfahren nach einem der Ansprüche 1, 2 oder 4 bis 6, **dadurch gekennzeichnet, dass** das Arbeitsgas des Laserstrahls und das Gas für den elektrischen Lichtbogen unter Argon, Helium, Stickstoff, Wasserstoff, Sauerstoff, Kohlendioxid oder einer Mischung davon gewählt werden.

9. Verfahren nach einem der Ansprüche 1 bis 8, **dadurch gekennzeichnet, dass** die Schweißgeschwindigkeit zwischen 5 m/mn und 20m/mn enthalten ist.

10. Verfahren nach einem der Ansprüche 1 bis 9, **dadurch gekennzeichnet, dass** das Metallband aus Metall oder einer Metalllegierung besteht, das/die unter Kohlenstoffstählen, rostfreien Stählen, Stählen mit hohen Elastizitätsgrenzen, beschichteten oder nicht beschichteten Stählen, Nickellegierungen, Kupferlegierungen und Titanlegierungen gewählt wird.

11. Verfahren nach einem der Ansprüche 1 bis 10, **dadurch gekennzeichnet, dass** eine Schweißverbindung mit Schrauben- oder Spiralform ausgeführt wird.
